# EUROPEAN PATENT APPLICATION

(11) **EP 1 818 825 A2**
(43) Date of publication of application: **15.08.2007**
(21) Application number: 07250396.4
(22) Date of filing: 30.01.2007
(51) Int. Cl.: G06F 9/445

(54) **Information processing device, method and program for controlling information processing device**

(30) Priority: 31.01.2006 JP 2006022635
(71) Applicant: SEIKO EPSON CORPORATION, Shinjuku-ku Tokyo 163-0811 (JP)
(72) Inventor: Taniguchi, Shinya c/o Seiko Epson Corporation, Suwa-shi Nagano-ken 392-8502 (JP); Fukao, Akihito c/o Seiko Epson Corporation, Suwa-shi Nagano-ken 392-8502 (JP)
(74) Representative: Cloughley, Peter Andrew

(57) **Abstract**

An information processing device to which an application program is delivered from an external information delivery device via a communication line, includes an application storage section that stores the application program in a condition operable by the information delivery device via the communication line, a process discrimination section that discriminates a process to the application program in accordance with one of a storing condition and storing information of the application program in the application storage section, and a program processing section that executes the process to the application program in accordance with the result of the discrimination.

## Description

The present invention relates to an information processing device, a method and a computer program for controlling an information processing device, and in particular to an application program assignment operation technique such as installing, updating, or uninstalling of an application program.

In the past, a specification of OSGi used for managing Java (registered trademark) applications (programs) for built-in devices has been known. In application assignment (e.g., installing, updating, or uninstalling), there has been a Java based API specification, which is configured to perform installing, updating, and uninstalling an application program via operating instructions (operating commands) such as "install," "update," and "uninstall" (see, for example, JP-A-5-270069).

However, in order for realizing the assignment operation of an application from the outside of a built-in device, a server program for processing the instructions is required, which problematically requires a client program in accordance with the specification of the server program.

Further, in the case in which the assignment operation of a Java application is performed from a program other than a Java program, creation of program applying the Java native interface (JNI) is required, which is problematically troublesome.

In view of the above, an advantage of some aspects of the invention is to provide an information processing device, a method and a computer program for controlling the information processing device capable of performing a desired assignment operation of an application without creating a program for the application assignment operation even in a built-in device which does not have a user interface.

According to an aspect of the invention, there is provided an information processing device to which an application program is delivered from an external information delivery device via a communication line, including an application storage section that stores the application program in a condition operable by the information delivery device via the communication line, a process discrimination section that discriminates a process to the application program in accordance with one of a storing condition and storing information of the application program in the application storage section, and a program processing section that executes the process to the application program in accordance with the result of the discrimination.

According to the above configuration, the application storage section stores the application program in the condition operable by the information delivery device via the communication line.

As a result, the process discrimination section discriminates the process to the application program in accordance with the storing condition or the storing information of the application program in the application storage section corresponding to the result of the operation of the information delivery device, and the program processing section performs the process to the application program in accordance with the discrimination result.

In this case, it is possible that the process discrimination section discriminates that the process to the application program is an installation process if the application program stored in the application storage section exists, and the program processing section executes installation of the application program in accordance with the discrimination result.

Further, it is also possible that the process discrimination section discriminates that the process to the application program is an installation process if the application program stored in the application storage section exists and a file size of the application program is larger than a predetermined size, and the program processing section performs the installation of the application program in accordance with the discrimination result.

Further, it is also possible that the process discrimination section discriminates that the process to the application program is an update process if the application program stored in the application storage section exists, a file size of the application program is larger than a predetermined size, and the application program with the same name has already been in an executable condition, and the program processing section performs the update of the application program in accordance with the discrimination result.

Still further, it is possible that a storage area management section that manages storage area of the application program in the application storage section is provided, and the process discrimination section discriminates that the process to the application program is an uninstallation process if the application program is absent from the storage area managed by the storage area management section, and the program processing section performs the uninstallation of the application program in accordance with the discrimination result.

Further, the file path information can also be used as the information representing the storage area.

Still further, it is also possible that a dependency discrimination section that discriminates whether or not another program having dependency on one application program exists is provided, and if the another program having dependency on the one application program exists, the program processing section inhibits execution of the uninstallation process except the case in which the one application program and all of other programs having dependency on the one application program are targets of the uninstallation process.

Further, according to another aspect of the invention, there is provided a control method of an information processing device, which an application program is delivered to from an external information delivery device via a communication line, and is provided with an application storage section that stores the application program in a condition operable by the information delivery device via the communication line, including the step of discriminating a process to the application program in accordance with one of a storing condition and storing information of the application program in the application storage section, and the step of executing the process to the application program in accordance with the result of the discrimination.

Further, according to another aspect of the invention, there is provided a program for controlling by a computer an information processing device to which an application program is delivered from an external information delivery device via a communication line, and which is provided with an application storage section that stores the application program in a condition operable by the information delivery device via the communication line, including an instruction of discriminating a process to the application program in accordance with one of a storing condition and storing information of the application program in the application storage section, and an instruction of executing the process to the application program in accordance with the result of the discrimination.

The invention will now be described by way of example only and with reference to the accompanying drawings, wherein like numbers refer to like elements.

Fig. 1 is a block diagram of a schematic configuration of an application delivery system according to an embodiment.

Fig. 2 is a functional block diagram of a printer.

Fig. 3 is a process flowchart of an installation process.

Fig. 4 is an explanatory diagram of the installation operation.

Fig. 5 is a process flowchart of an uninstallation process.

Fig. 6 is an explanatory diagram of the uninstallation operation of an application.

Fig. 7 is a process flowchart of an update process.

Fig. 8 is an explanatory diagram of the update operation of an application.

A preferred embodiment of the invention will now be explained with reference to the accompanying drawings.

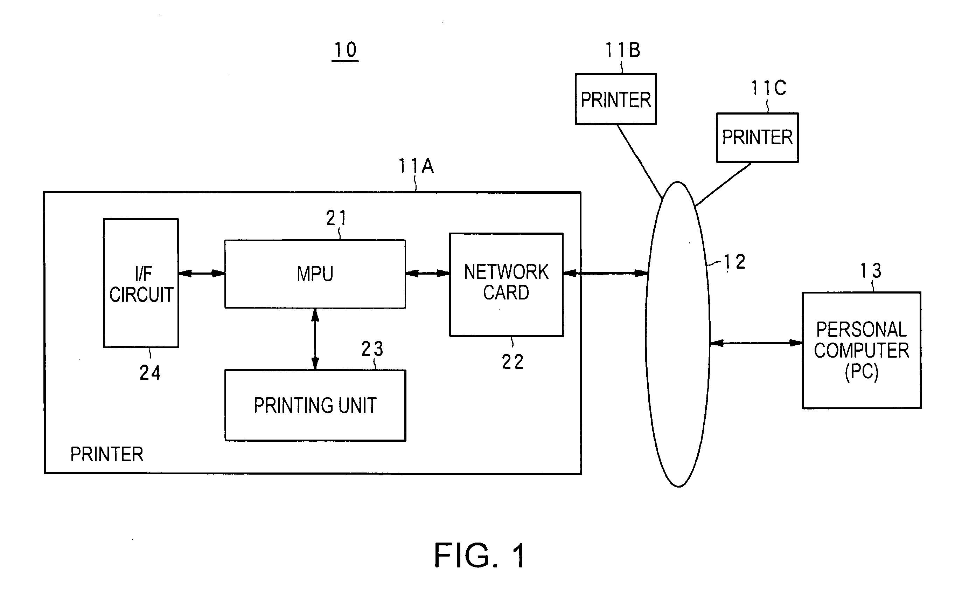

Fig. 1 is a block diagram of a schematic configuration of an application delivery system according to the embodiment.

The application delivery system 10 functions as an information processing device, and is configured to be provided with printers 11A through 11C for performing various printing operations under control of a personal computer described later, a network 12 including the Internet, LAN, and so on to which the printers 11A through 11C are connected, and the personal computer (PC) 13 connected to the network 12 and, via the network 12, to the printers 11A through 11C for performing printing control and delivery of an application.

In this case, as an application to be delivered to the printers 11A through 11C, there can be cited an authentication application for discriminating whether or not the print output is issued by a normal user, a cluster printing (distributed printing) application for performing printing with a plurality of printers in a distributed manner (e.g., printing sixty copies by three printers 11A through 11C as many as twenty copies each), an image processing application for performing a process on an image to be printed, and a state management application for notifying the statuses of the printers 11A through 11C to the personal computer 13 functioning as a management server or notifying a service company for maintenance or replenishment of consumables.

The configurations of the printers will now be explained.

The printers 11A through 11C may have the same configurations, and accordingly, the explanation will be presented taking the printer 11A as an example.

The printer 11A is provided with an MPU 21 for controlling the whole of the printer 11A, a network card 22 for performing an interface operation between the network 12 and the MPU 21, a printing unit 23 for actually performing various printing processes under control of the MPU 21, and an interface (I/F) circuit 24 for performing an interface operation between a USB terminal, an IEEE1394 terminal, a parallel interface terminal, or the like which is not shown, and the MPU 21.

Here, the MPU 21 is configured as a microcomputer, and is mainly provided with a CPU for controlling the whole of the MPU 21, a ROM for previously storing the control program and so on, and a RAM for temporarily storing data and so on.

Further, the printing unit 23 is provided with a print head for performing various printing processes, a carriage mechanism for driving the print head in a predetermined printing direction, a transport mechanism for transporting a recording medium, and so on.

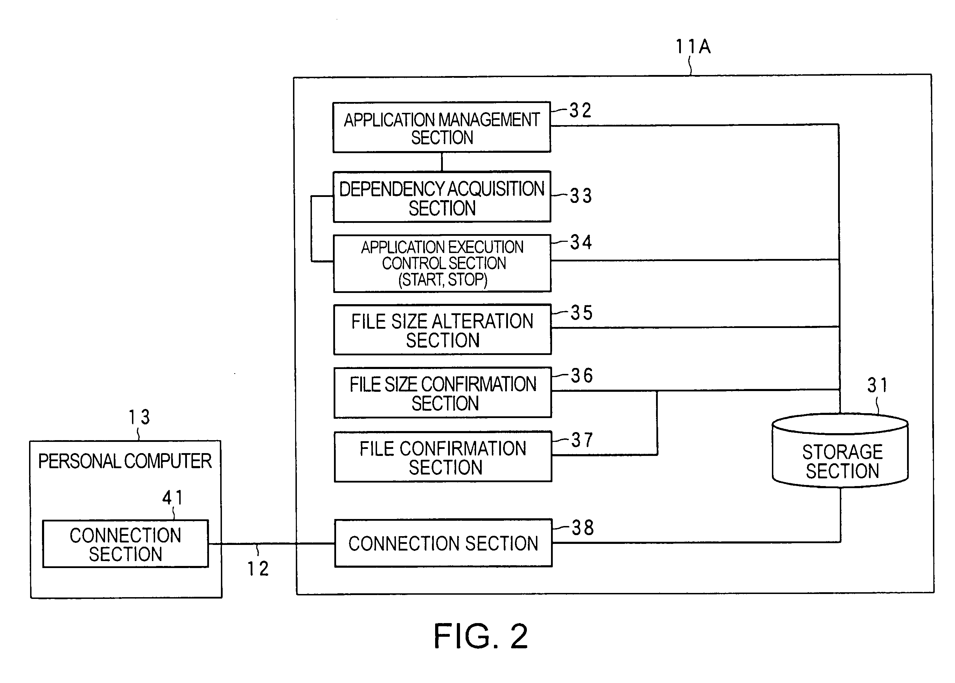

Fig. 2 is a functional block diagram of the printer.

The printers 11A through 11C may have the same configurations, and accordingly, the explanation will be presented taking the printer 11A as an example also in Fig. 2.

The printer 11A is provided with a storage section 31 capable of storing a plurality of applications, an application management section 32 for performing management of all of the applications, a dependency acquisition section 33 for acquiring information regarding dependency between the plurality of applications, an application execution control section 34 for performing the execution control (installation, update, and uninstallation) of the applications in the present printer 11A, a file size alteration section 35 for altering the file size (information) of the application, which is stored in the storage section 31 and whose installation process has been completed, a file size confirmation section 36 for confirming the file size (information) of the application stored in the storage section 31, a file confirmation section 37 for discriminating whether or not the file of the designated application exists on the storage section 31, and a connection section 38 for performing a connection process with the personal computer 13 via the network 12.

On the other hand, the personal computer 13 is also provided with a connection section 41 for performing a connection process with the printer 11A via the network 12.

The action of the embodiment will now be explained.

Firstly, the operation when installing the application will be explained.

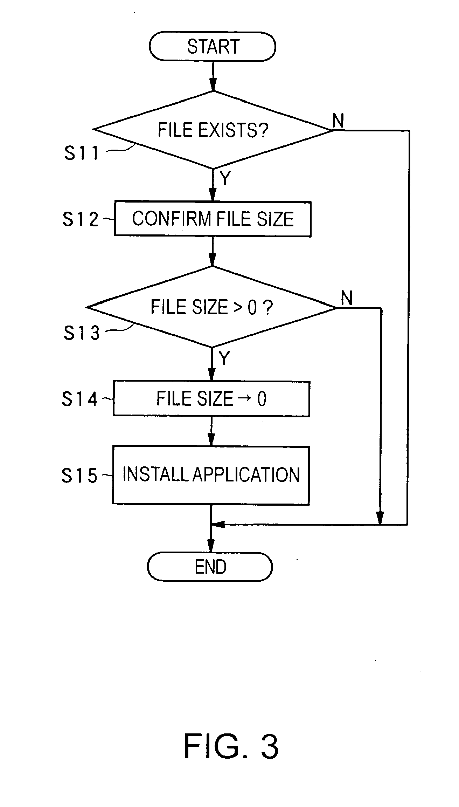

Fig. 3 is a process flowchart of the installation process.

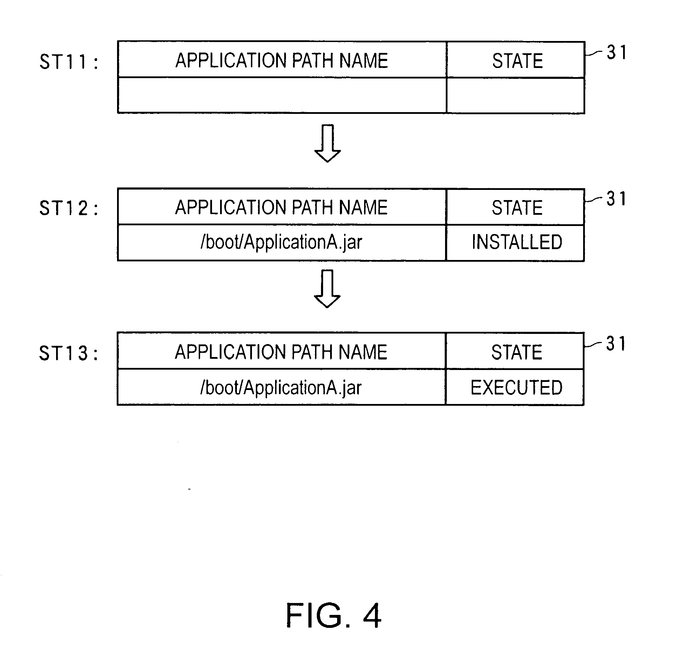

Fig. 4 is an explanatory diagram of the installation operation.

In the present embodiment, it is arranged that the installation is executed in the side of the printer only by storing the application, which is the target of the installation, in the designated directory (assumed to be directory "/boot" in the following explanation) for the assignment operation in the storage section 31.

It is assumed that no application is stored in the designated directory for the assignment operation in the storage section 31 in the initial state as shown in a state ST11 of Fig. 4.

Firstly, the connection section 41 of the personal computer 13 transfers the application A, which is the target of the installation to the designated directory (directory "/boot") for the assignment operation in the storage section 31 via the connection section 38 of the network 12 and the printer 11A to be stored therein. Then the file confirmation section 37 of the printer 11A discriminates whether or not the file is stored in the designated directory of the storage section 31 in the next start-up sequence (a restart sequence) (step S11).

If no file is stored in the designated directory of the storage section 31 in the discrimination in the step S11 (step S11: NO), the MPU 21 of the printer 11A terminates the installation process and proceeds to a normal process.

As shown in a state ST12 in Fig. 4, if a file is stored in the designated directory of the storage section 31 in the discrimination of the step S11 (step S11: YES), the file size confirmation section 36 acquires the file size of the application A (step S12).

Then, the file size confirmation section 36 discriminates whether or not the file size of the application A is larger than 0 (byte) (step S13).

If the file size of the application A is equal to 0 (byte) in the discrimination of the step S13 (step S13: NO), the MPU 21 of the printer 11A terminates the installation process and proceeds to a normal process because the installation process is no more necessary.

If the file size of the application A is larger than 0 (byte) in the discrimination of step S13 (step S13: YES), the file size alteration section 35 sets the file size of the application A to 0 (byte), and the application execution control section performs installation of the application A stored in the storage section.

Thus, the application A is installed in the printer 11A as shown in a state ST13 of Fig. 4, and becomes executable after it is restarted.

Therefore, if the printer 11A is subsequently restarted, the file confirmation section 36 of the printer 11A confirms the file stored in the designated directory of the storage section 31 to confirm existence of the application A.

Subsequently, the file size confirmation section 36 acquires the file size of the application A.

In this case, the file size confirmation section 36 confirms that the file size of the application A is 0 (byte), and the MPU 21 is to proceed to execution of the application A confirming that the installation of the application A is not necessary.

The operation in the case in which the uninstallation of the application is performed will now be explained.

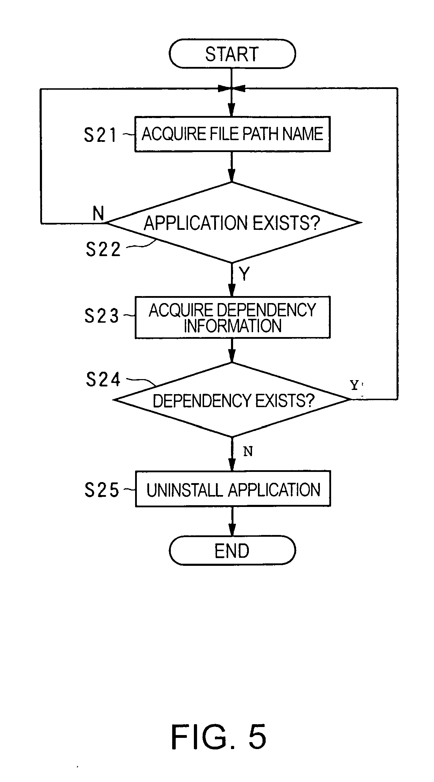

Fig. 5 is a process flowchart of the uninstallation process.

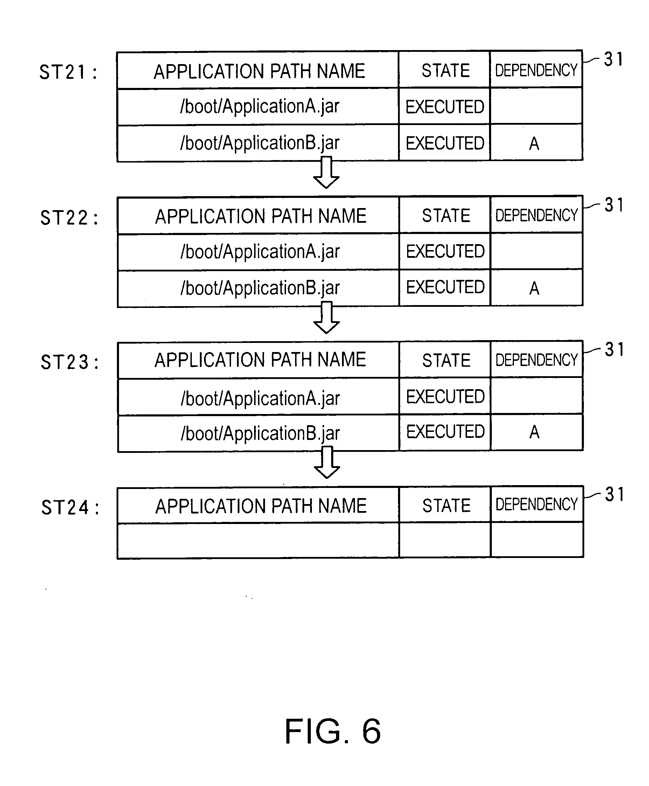

Fig. 6 is an explanatory diagram of the uninstallation operation of the application.

In the present embodiment, it is arranged that the uninstallation is performed in the side of the printer only by deleting the application, which is the target of the uninstallation, from the designated directory for the assignment operation in the storage section 31.

In this case, it is assumed that, as shown in a state ST21 of Fig. 6, two applications, application A and application B have already been installed and executed in the printer 11A, wherein the application B depends only on the application A, and no other applications depend on the application A.

It should be noted here that the dependency of the application B on the application A denotes that execution of the application B is premised on execution of the application A, in other words, the application B cannot be independently executed without the application A.

In the following description, the case in which the personal computer 13 tries to uninstall the application A (with a file name of "applicationA.jar") and the application B (with a file name of "applicationB.jar") will be explained.

Firstly, the personal computer 13 deletes the application A, which is the target of the uninstallation, from the designated directory "/boot" for the assignment operation in the storage section 31 via the network 12.

Thus, the application management section 32 of the printer 11A acquires a file path name of an application, which is presently installed and in a running state (step S21).

Specifically, as shown in a state ST21 of Fig. 6, it is assumed to acquire the file path of the application A, "/boot/applicationA.jar," and the file path of the application B, "/boot/applictionB.jar" depending on the application A.

Subsequently, the file confirmation section 37 confirms the file (step S22) existing in the directory "/boot" or a subdirectory thereof based on the file path acquired by the application management section 32 to confirm that the application A does not actually exist.

Subsequently, the dependency acquisition section 33 acquires dependency information between the application A and a bundle in execution (step S23).

Subsequently, the dependency acquisition section 33 discriminates whether or not dependency between the target application (the application A) and other applications is included in the acquired dependency information (step S24).

In the discrimination in the step S24, since the application B has dependency on the application A, as shown in a state ST22 of Fig. 6, the process proceeds to the step S21 at this time point without performing the uninstallation.

On the other hand, the personal computer 13 deletes the application B, which is the target of the uninstallation, from the designated directory "/boot" for the assignment operation in the storage section via the network 12.

Along with this operation, the application management section 32 of the printer acquires a file path name of an application, which is presently installed (step S21).

In this case, as shown in a state ST23 of Fig. 6, since the application A has not been deleted yet, it is assumed to acquire the file path of the application A, "/boot/applicationA.jar," and the file path of the application B, "/boot/applictionB.jar" depending on the application A.

Subsequently, the file confirmation section 37 confirms the file (step S22) existing in the directory "/boot" or a subdirectory thereof based on the file path acquired by the application management section 32 to confirm that the application B does not actually exist.

Subsequently, the dependency acquisition section acquires dependency information of the application A and the application B with a bundle in execution (step S23).

Subsequently, the dependency acquisition section 33 discriminates whether or not dependency between the target application (the application A and the application B) and other applications is included in the acquired dependency information (step S24).

In the discrimination of the step S24, since no other applications have dependency on the application A and the application B, and the application B has dependency only on the application A, there is no other application affected by the uninstallation of the both applications A and B, and accordingly, it is determined to uninstall the application A and the application B (step S25), and the uninstallation process is terminated as shown in a state ST24 of Fig. 6.

The operation in the case in which the update (revision) of the application is performed will now be explained.

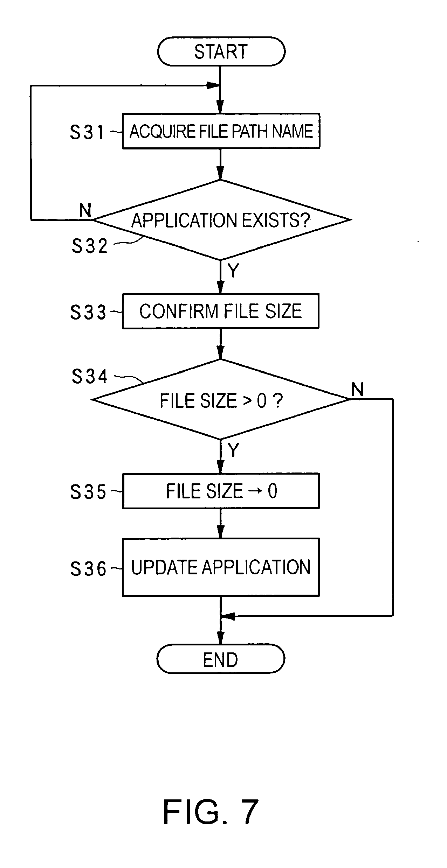

Fig. 7 is a process flowchart of the update process.

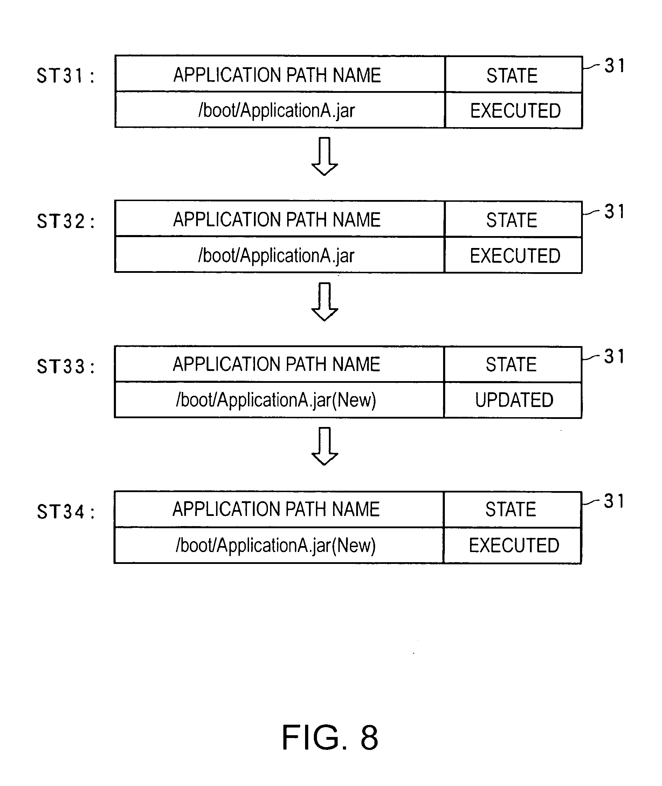

Fig. 8 is an explanatory diagram of the update operation of the application.

In this case, the application A as the target of the update is assumed to have been already installed as shown in a state ST31 of Fig. 8.

Firstly, the personal computer 13 transfers the application A, which is the target of the update, to the designated directory for the assignment operation in the storage section via the network 12 to be stored therein.

Along with this operation, the application management section 32 of the printer 11A acquires the file path name of the presently installed application (step S31) as shown in a state ST32 of Fig. 8.

Specifically, in the case of Fig. 8, the file path of the application A, "/boot/applicationA.jar" is to be acquired.

Subsequently, the file confirmation section 37 confirms the file (step S32) existing in the directory "/boot" or a subdirectory thereof based on the file path acquired by the application management section 32 to confirm that the application A exists in the directory "/boot."

Subsequently, the file size confirmation section 36 acquires the file size of the application A (step S33).

Then, the file size confirmation section 36 discriminates whether or not the file size of the application A is larger than 0 (byte) (step S34).

If the file size of the application A is equal to 0 (byte) in the discrimination of the step S34 (step S34: NO), the MPU 21 of the printer 11A terminates the update process and proceeds to a normal process because the update process is no more necessary.

If the file size of the application A is larger than 0 (byte) in the discrimination of the step S34 (step S34: YES), the file size confirmation section 36 notifies the file size alteration section 35 and the application execution control section 34 accordingly.

Thus, the file size alteration section 35 updates the file size information of the application A (the application prior to the update) in the directory "/boot" of the storage section 31 so as to set the file size of the application A in the directory "/boot" of the storage section to 0 (byte) (step S35).

Along with this operation, the application execution control section 34 executes the application A newly stored in the storage section 31 (step S36).

Thus, the update of the application A is performed, and is assumed to be installed in the printer 11A as shown in a state ST33 of Fig. 8.

If the printer 11A is subsequently restarted, as shown in a state ST32 of Fig. 8, the file confirmation section 37 of the printer 11A confirms the file stored in the designated directory of the storage section 31 to confirm existence of the application A.

Subsequently, the file size confirmation section 36 acquires the file size of the application A.

In this case, the file size confirmation section 36 confirms that the file size of the application A is 0 (byte), and terminates process confirming that there is no need for updating (installing) the application A.

As explained above, according to the present embodiment, since the printer as the information processing device can perform installation, update, or uninstallation of an application only by the information delivery device such as a personal computer performing a writing operation or a deleting operation of a file (application) to a predetermined delivery operation directory of the information processing device, a trouble of creating a server program or a client program can be reduced. As a result, enhancement of development efficiency can be achieved.

Although in the above descriptions the configuration of storing the application (file) as the target of assignment process (the target of installation, uninstallation, or update) in a predetermined directory is adopted, it is possible to configure that a dedicated storage device (memory or the like) is provided, and the target application (file) is stored in the storage device.

Although in the above descriptions the case with a printer (a printing device) as an external instrument as a client is explained, it is not limited thereto, but can be applied to an information processing device having various information processing functions such as a personal computer or a portable information device such as a PDA or a cellular phone, and capable of connecting to an information delivery device (e.g., information delivery server) via a communication line.

The foregoing description has been given by way of example only and it will be appreciated by a person skilled in the art that modifications can be made without departing from the scope of the present invention.

## Claims

1. An information processing device to which an application program is delivered from an external information delivery device via a communication line, comprising:
an application storage section that stores the application program in a condition operable by the information delivery device via the communication line;
a process discrimination section that discriminates a process to the application program in accordance with one of a storing condition and storing information of the application program in the application storage section; and
a program processing section that executes the process to the application program in accordance with the result of the discrimination.

2. The information processing device according to Claim 1,
wherein the process discrimination section discriminates that the process to the application program is an installation process if the application program stored in the application storage section exists, and
the program processing section executes installation of the application program in accordance with the discrimination result.

3. The information processing device according to Claim 1,
wherein the process discrimination section discriminates that the process to the application program is an installation process if the application program stored in the application storage section exists and a file size of the application program is larger than a predetermined size, and
the program processing section executes installation of the corresponding application program in accordance with the discrimination result.

4. The information processing device according to any one of the preceding claims,
wherein the process discrimination section discriminates that the process to the application program is an update process if the application program stored in the application storage section exists, a file size of the application program is larger than a predetermined size, and the application program with the same name has already been in an executable condition, and
the program processing section executes update of the corresponding application program in accordance with the discrimination result.

5. The information processing device according to any one of the preceding claims, further comprising
a storage area management section that manages storage area of the application program in the application storage section,
wherein the process discrimination section discriminates that the process to the application program is an uninstallation process if the application program is absent from the storage area managed by the storage area management section, and
the program processing section executes uninstallation of the corresponding application program in accordance with the discrimination result.

6. The information processing device according to Claim 5,
wherein file path information is used as information representing the storage area.

7. The information processing device according to Claim 5, further comprising
a dependency discrimination section that discriminates whether or not another program having dependency on one application program exists,
wherein if the another program having dependency on the one application program exists, the program processing section inhibits execution of the uninstallation process except the case in which the one application program and all of other programs having dependency on the one application program are targets of the uninstallation process.

8. A control method of an information processing device, which an application program is delivered to from an external information delivery device via a communication line, and is provided with an application storage section that stores the application program in a condition operable by the information delivery device via the communication line, comprising:
discriminating a process to the application program in accordance with one of a storing condition and storing information of the application program in the application storage section; and
executing the process to the application program in accordance with the result of the discrimination.

9. A program for controlling by a computer an information processing device to which an application program is delivered from an external information delivery device via a communication line, and which is provided with an application storage section that stores the application program in a condition operable by the information delivery device via the communication line, comprising:
an instruction of discriminating a process to the application program in accordance with one of a storing condition and storing information of the application program in the application storage section; and
an instruction of executing the process to the application program in accordance with the result of the discrimination.
